# EUROPÄISCHE PATENTSCHRIFT

(11) **EP 3 215 756 B1**
(45) Veröffentlichungstag und Bekanntmachung des Hinweises auf die Patenterteilung: **20.08.2025**
(21) Anmeldenummer: 15784945.6
(22) Anmeldetag: 22.10.2015
(51) Int. Cl.: F16F 9/348

(54) **REGELBARER SCHWINGUNGSDÄMPFER FÜR KRAFTFAHRZEUGE**
CONTROLLABLE SHOCK ABSORBER FOR MOTOR VEHICLES
AMORTISSEUR DE VIBRATIONS RÉGULABLE POUR VÉHICULES À MOTEUR

(30) Priorität: 07.11.2014 DE 102014116264
(43) Veröffentlichungstag der Anmeldung: 13.09.2017
(73) Patentinhaber: thyssenkrupp AG, 45143 Essen (DE); thyssenkrupp Bilstein GmbH, 58256 Ennepetal (DE)
(72) Erfinder: HAMERS, Wolfgang, 52428 Jülich (DE); SMELJANSKIJ, Dmitrij, 51373 Leverkusen (DE)
(74) Vertreter: thyssenkrupp Intellectual Property GmbH
(86) Internationale Anmeldenummer: PCT/EP2015/074446
(87) Internationale Veröffentlichungsnummer: WO 2016/071116

(56) Entgegenhaltungen:
- DE-C1- 19 650 152
- GB-A- 2 222 227
- JP-A- H05 141 469
- US-A- 5 810 127
- US-A1- 2013 180 813
- US-A1- 2014 262 655

## Beschreibung

Die vorliegende Erfindung betrifft einen regelbaren Schwingungsdämpfer gemäß dem Oberbegriff des Anspruches 1.

### STAND DER TECHNIK

Ein solcher Schwingungsdämpfer ist aus der DE 44 41 047 Cl bekannt. An einem axial innerhalb eines Zylinderrohres geführten Kolben sind druckabhängige Dämpfungsventile für einen Austausch von Fluid in der Zug- und Druckstufe zwischen zwei Arbeitsräumen vorgesehen. Eine Vorsteuerung wirkt derart, dass ein steuerbarer Druck in Vorsteuerkammern aufgebaut wird. Der Vorsteuerdruck beaufschlagt die Ventilscheiben der Dämpfungsventile in deren geschlossener Stellung. Durch ein Bypasskanalsystem wird Fluid aus den Arbeitsräumen in die Vorsteuerkammern geleitet und so der Druck dort erhöht. Der Vorsteuerdruck wird mithilfe eines in dem Bypasskanalsystem angeordneten, extern einstellbaren Vorsteuerventils geregelt. Ein elastisches Element bildet die Abtrennung zwischen der Vorsteuerkammer und dem Arbeitsraum.

Ein weiterer Schwingungsdämpfer, der nach demselben Prinzip arbeitet, ist aus der DE 101 04 640 Cl bekannt. Hierin werden die Vorsteuerkammern durch Druckräume gebildet. Diese Druckräume werden durch jeweils ein Druckraumgehäuse und eine Dichtung, die beweglich auf einem Dämpfungsventil aufliegt, gebildet. Ein Vorsteuerventil steuert den Druck in den Vorsteuerkammern. Ein Auslass des Vorsteuerventils mündet in die Arbeitsräume.

Die Ventilscheiben verleihen dem Schwingungsdämpfer in der Regel ein degressives Dämpfungsverhalten bei hohen Kolbengeschwindigkeiten, bei denen es zu einem Abheben der Ventilscheiben vom Ventilsitz kommt. Dabei vergrößert sich der Öffnungsquerschnitt mit zunehmender Geschwindigkeit, was das degressive Verhalten auslöst.

Parallel zur Dampfung über die Ventilscheiben ist im Kolben durch einen oder mehrere Bypasskanäle eine Drossel zwischen den Arbeitsräumen gebildet, die dem Dämpfungsverhalten des Schwingungsdämpfers eine progressive Komponente verleiht. Der Einfluss dieser progressiven Komponente ist insbesondere bei kleinen Kolbengeschwindigkeiten von Belang, bei denen die Ventilscheiben noch vollständig auf dem Ventilsitz anliegen. Solch ein Bypasskanal kann durch eine Kerbe in der Ventilscheibe oder in dem Ventilsitz gebildet werden, so dass ein Durchströmen der Fluiddurchführungen von einer Arbeitskammer in die andere Arbeitskammer trotz vollständig am Ventilsitz anliegender Ventilscheiben möglich ist. Allerdings ist ein solcher Bypasskanal grundsätzlich wirksam für beide Durchflussrichtungen, so dass hierdurch die progressive Komponente nur im gleichem Maße für beide Durchflussrichtungen eingestellt werden kann.

Die Dimensionierung der Bypassquerschnitte durch die Kerben an der Ventilscheibe oder dem Ventilsitz bedingt angepasste Ventilscheiben oder Kolben, was das Vorhalten einer hohen Anzahl unterschiedlicher Scheiben und Kolben erfordert.

Die WO 2010/122102 Al offenbart einen Schwingungsdämpfer, der sich durch ein besonders sanftes Öffnen der Ventilscheiben auszeichnen soll. Für die Druck- und Zugseite sind jeweils für eine Ventilscheibe mehrere Ventilsitzbereiche ausgebildet, die unterschiedlich stark mit Hydraulikfluid versorgt werden können. Im statischen Zustand liegt an allen Ventilsitzbereichen derselbe Hydraulikdruck an, so dass die Ventilscheibe bei weiterer Druckbeaufschlagung schnell öffnet. Im dynamischen Zustand kann in einigen Ventilsitzbereichen aufgrund eines geringeren Zuflussquerschnitts des dazugehörigen Hydraulikkanals der Druck nicht aufrecht erhalten werden. Diese Ventilsitzbereiche unterstützen so zwar ein schnelles Öffnen der Ventilscheibe; ist die Scheibe dann geöffnet, haben diese Ventilsitzbereiche keinen oder nur geringen Einfluss auf das weitere Öffnen des Ventils. Der Schwingungsdämpfer sieht keine Bypasskanäle im Kolben vor.

Aus der US 2014/0262655 A1 ist ein Stoßdämpfer mit einem Bypasskanal innerhalb des Kolbens bekannt, wobei der Bypasskanal ausgangsseitig eine Kombination aus einer Lochscheibe und einer Rückschlagscheibe zur strömungsgeschwindigkeitsabhängigen Einstellung des Bypassquerschnitts aufweist. Die GB2222227A offenbart einen regelbaren Schwingungsdämpfer mit den Merkmalen der Präambel des Anspruchs 1.

Es ist Aufgabe der vorliegenden Erfindung, den gattungsgemäßen Schwingungsdämpfer derart weiterzubilden, dass auf recht einfache Weise für beide Durchflussrichtungen das Dämpfungsverhalten bei kleinen Kolbengeschwindigkeiten separat eingestellt werden kann.

### OFFENBARUNG DER ERFINDUNG

Die der Erfindung zugrundeliegende Aufgabe wird gelöst durch einen regelbaren Schwingungsdämpfer, insbesondere für ein Fahrzeugfahrwerk, umfassend ein Zylinderrohr, das ein darin abgedichtet aufgenommenes Hydraulikfluid aufweist, einen Kolben, der innerhalb des Zylinderrohres entlang einer Zylinderrohrachse axial bewegbar ist und der das Zylinderrohr in zwei Arbeitsräume unterteilt, eine Kolbenstange, die parallel zur Zylinderrohrachse ausgerichtet und mit dem Kolben verbunden ist, wobei der Kolben zumindest zwei Fluiddurchführungen aufweist, durch die der eine Arbeitsraum mit dem anderen Arbeitsraum verbunden ist, wobei eine erste Ventilbaugruppe zur Dämpfung der Kolbenbewegung in einer ersten Betätigungsrichtung an einer ersten Fluiddurchführung angeordnet ist und wobei eine zweite Ventilbaugruppe zur Dämpfung der Kolbenbewegung in einer zweiten Betätigungsrichtung an einer zweiten Fluiddurchführung angeordnet ist, wobei jede Ventilbaugruppe zumindest eine Ventilscheibe aufweist, die in einer geschlossenen Ventilstellung auf einem Ventilsitz aufsitzt und so die zugehörige Fluiddurchführung zumindest teilweise abdeckt, und die in einer geöffneten Ventilstellung zumindest teilweise von dem Ventilsitz beabstandet ist. Der Ventilsitz, die zugehörige Ventilscheibe und der Kolben grenzen jeweils einen Vorhof ab, in den die jeweilige Fluiddurchführung ausgangsseitig mündet. Im Kolben ist zusätzlich zu den Fluiddurchführungen ein Bypasskanal mit unterschiedlich großen Durchflussquerschnitten für beide Durchflussrichtungen vorgesehen oder es sind mehrere Bypasskanäle vorgesehen, deren Durchflussquerschnitte in Summe für beide Durchflussrichtungen unterschiedlich groß sind. Erfindungsgemäß ist anhand des einen Bypasskanals eine Fluidverbindung oder sind anhand der mehreren Bypasskanäle mehrere Fluidverbindungen zwischen den beiden Arbeitsräumen unter Umgehung beider Vorhöfe gebildet, wobei Öffnungen des Bypasskanals bzw. der Bypasskanäle durch eine Rückschlagscheibe, die separat zu den Ventilscheiben ausgebildet ist, zumindest teilweise bedeckt sind, wobei eine Rückschlagscheibe zur Begrenzung des Durchflussquerschnitts koaxial und axial versetzt zu einer Ventilscheibe angeordnet ist, wobei die Rückschlagscheibe und die Ventilscheibe an derselben Seite des Kolbens angeordnet sind, wobei die Rückschlagscheibe zur Reduktion des Bypassquerschnitts den Eingang des Bypasskanals nicht vollständig abdeckt und wobei der Durchflussquerschnitt zumindest in einer Durchflussrichtung durch eine Rückschlagscheibe verringert wird, wobei die Rückschlagscheibe mindestens eine, vorzugsweise mehrere radial, vorstehende Bypassklappen aufweist. Des Weiteren sind die für beide Durchflussrichtungen unterschiedlich große Durchflussquerschnitte dadurch realisiert, dass eine Öffnung des Bypasskanals bzw. Öffnungen der Bypasskanäle an den beiden Seiten des Kolbens in unterschiedlichem Maße durch entsprechende Rückschlagscheiben bedeckt sind.

Durch diese Anordnung lassen sich unterschiedliche Bypassquerschnitte realisieren, ohne dass es einer besonderen Ausgestaltung der Ventilscheiben oder des Ventilsitzes bedarf. Als Kolben kann so ein Standardkolben ohne anwendungsspezifische Kerben in den Ventilsitzen verwendet werden; auch als Ventilscheiben können nunmehr Standardscheiben ohne anwendungsspezifische Kerben oder sonstige Durchlässe verwendet werden. Somit kann durch die unterschiedlichen Durchflussquerschnitte der Bypasskanäle das Dämpfungsverhalten des Schwingungsdämpfers insbesondere für kleine Kolbengeschwindigkeiten für beide Durchflussrichtungen separat eingestellt werden.

Vorzugsweise ist eine Öffnung des einen Bypasskanals bzw. der mehreren Bypasskanäle durch eine Rückschlagscheibe, die separat zu den Ventilscheiben ausgebildet ist, zumindest teilweise bedeckt. Anstelle der Ventilscheiben dient so eine spezifische Rückschlagscheibe zur Einstellung eines definierten, frei durchströmbaren Bypasskanal-Eintrittsquerschnitts. Da die Rückschlagscheibe nur in einer Durchströmungsrichtung eine Querschnittsverringerung des Bypasskanals erzeugt, lassen sich die Durchflussquerschnitte für beide Durchflussrichtungen durch Auswahl geeigneter Rückschlagscheiben separat einstellen. Solche Rückschlagscheiben können aus Kunststoff gebildet sein und sind daher sehr günstig herzustellen. Vorzugsweise werden die für beide Durchflussrichtungen unterschiedlich großen Durchflussquerschnitte dadurch realisiert, dass eine Öffnung des Bypasskanals bzw. Öffnungen der Bypasskanäle an den beiden Seiten des Kolbens in unterschiedlichem Maße durch entsprechende Rückschlagscheiben bedeckt ist bzw. sind. Das bedeutet, dass die Öffnungen (bzw. nur eine Öffnung), des Bypasskanals, die dem einen Arbeitsraum zugewandt sind, in einem unterschiedlichen Maße durch eine Rückschlagscheibe bedeckt sind, als die anderen Öffnungen (bzw. nur eine Öffnung), die dem anderen Arbeitsraum zugewandt sind. Durch den unterschiedlichen Grad der Bedeckung der Öffnungen kann der freie Einströmquerschnitt und damit auch der Strömungswiderstand bzw. der bei der Durchströmung auftretende Druckverlust individuell für beide Durchflussrichtungen eingestellt werden. Als Seiten des Kolbens werden im Rahmen der Erfindung die kolbenstangenseitige bzw. die kolbenstangenferne Seite des Kolbens verstanden. Die kolbenstangenseitige Seite ist dabei dem kolbenstangenseitigen Arbeitsraum zugewandt, während die kolbenstangenferne Seite dem kolbenstangenfernen Arbeitsraum zugewandt ist.

Realisiert wird diese Wirkweise vorzugsweise ferner dadurch, dass an einer der Seiten des Kolbens eine Eingangsöffnung des ersten oder zweiten Fluiddurchgangs vorgesehen ist, die durch einen der Ventilsitze umschlossen ist, und dass an dieser Seite des Kolbens eine Eingangsöffnung des Bypass vorgesehen ist, die nicht von dem Ventilsitz umschlossen ist. Zur Einströmung des Fluids in den Bypasskanal ist daher ein Durchströmen des Ventilsitzes und damit des Vorhofes nicht erforderlich. Dies gilt insbesondere auch für sämtliche Eingänge von gegebenenfalls mehreren Bypasskanälen.

Vorzugsweise ist eine Rückschlagscheibe zur Begrenzung des Durchflussquerschnittes des Bypasskanals koaxial und axial versetzt zu einer Ventilscheibe angeordnet, wobei die Rückschlagscheibe und die Ventilscheibe an derselben Seite des Kolbens angeordnet sind. Die Rückschlagscheibe lässt sich so leicht montieren. Ferner lässt sich durch Verwendung solcher Scheiben der Schwingungsdämpfer leicht auf andere Anwendungen abstimmen. Die Rückschlagscheibe muss allerdings den Eingang des Bypasskanals nicht vollständig abdecken; zur Reduktion des Bypassquerschnitts reicht eine teilweise Abdeckung aus.

Vorzugsweise sind auf einer Seite (der kolbenstangenseitigen und/oder der kolbenstangenfernen Seite) des Kolbens in Umfangsrichtung verteilt mehrere Umfangsbereiche gebildet, von denen zumindest ein erster Bereich von einem Ventilsitz umschlossen ist und zumindest ein zweiter Bereich von dem Ventilsitz nicht umschlossen ist. In dem zweiten, nicht umschlossenen Bereich können die Öffnungen der Fluiddurchgänge und/oder die der Bypasskanäle angeordnet werden, so dass die Umgehung der Vorhöfe realisiert wird. In dem ersten umschlossenen Bereich werden die Ausgänge der Fluiddurchgänge angeordnet, so dass die Fluiddurchgänge in die Vorhöfe hinein münden.

Vorzugsweise wird der Durchflussquerschnitt zumindest in einer Durchflussrichtung durch eine Rückschlagscheibe verringert, wobei die Rückschlagscheibe mindestens einen, vorzugsweise mehrere, radial vorstehende Bypassklappen aufweist. Die Bypassklappen reduzieren teilweise den frei durchströmbaren Querschnitt des Bypasskanals. Durch die geometrische Ausgestaltung der Bypassklappen kann der frei durchströmbare Querschnitt des Bypasskanals eingestellt und damit der bei der Durchströmung entstehende Druckverlust abgestimmt werden. Die Anzahl der Bypassklappen einer/mehrerer Rückschlagscheibe/Rückschlagscheiben entspricht zumindest der Anzahl der abzudeckenden Bypasskanal-Eintrittsöffnungen. Bei der Durchströmung in den jeweiligen Durchflussrichtungen stellt sich somit ein für beide Durchflussrichtungen unterschiedlich großer Druckverlust ein, wenn die Bypasskanäle durch die Bypassklappen in unterschiedlichem Maße abgedeckt werden.

Dabei ist vorzugsweise die Rückschlagscheibe derart ausgestaltet, dass die Rückschlagscheibe wahlweise mit beiden Seiten derart auf dem Kolben montiert werden kann, dass die Bypassklappe bzw. die mehreren Bypassklappen den Durchflussquerschnitt des Bypasskanals bzw. die Durchflussquerschnitte der Bypasskanäle verringern. Dies kann durch die Anordnung von einer geraden Anzahl, insbesondere zwei oder vier, Bypassklappen realisiert sein, wobei wesentliche Teile der Bypassklappen rotationssymetrisch um eine Rotationsachse zueinander angeordnet sind. Hierdurch kann die Montage deutlich vereinfacht werden, da die Rückschlagscheibe in jeglicher Ausrichtung montiert werden kann. Eine Fehlmontage kann nahezu ausgeschlossen werden.

Vorzugsweise sind an den Bypassklappen Anlageflächen zur korrekten Ausrichtung der Rückschlagscheibe gegenüber einem Positionierelement des Kolbens ausgebildet. Hierdurch wird eine Montage in der korrekten Position gegenüber dem Kolben begünstigt.

Die Erfindung ist insbesondere anwendbar bei solchen Schwingungsdämpfern, bei denen jede Ventilbaugruppe eine Vorsteuerkammer umfasst, wobei durch Druckbeaufschlagung der Vorsteuerkammer die Ventilscheibe in die geschlossene Ventilstellung vorspannbar ist, wobei der Druck in den jeweiligen Vorsteuerkammern durch zumindest ein Vorsteuerventil einstellbar ist. Bei solchen Schwingungsdämpfern wirkt sich ein möglicher Rückstau an den Eingängen der Bypasskanäle durch die Umgehung der Vorhöfe durch die beanspruchte Anordnung nicht auf das Druckgefüge in den Vorhöfen aus. Damit kann sichergestellt werden, dass der Druck in den Vorhöfen nach wie vor hauptsächlich durch den Druck in den Vorsteuerkammern und natürlich der Kolbengeschwindigkeit beeinflusst wird. Eine Verfälschung durch die Drosselwirkung Bypasskanäle wird vermieden.

### BEVORZUGTE AUSFÜHRUNGSBEISPIELE DER ERFINDUNG

Weitere, die Erfindung weiterbildende Maßnahmen werden nachstehend gemeinsam mit der Beschreibung bevorzugter Ausführungsbeispiele der Erfindung anhand der Figuren näher dargestellt. Es zeigt:
- Fig. 1: einen Teil eines herkömmlichen Schwingungsdämpfers mit einer Ventilbaugruppe im Querschnitt;
- Fig. 2: den Kolben eines erfindungsgemäßen Schwingungsdämpfers in Einzelheit in perspektivischer Darstellung;
- Fig. 3: die Rückschlagscheibe eines erfindungsgemäßen Schwingungsdämpfers in Einzelheit in Draufsicht;
- Fig . 4: den Kolben nach Figur 2 mit zwei daran montierten Rückschlagscheiben nach Figur 4 in perspektivischer Darstellung;
- Fig. 5: die Anordnung nach Figur 4 im Querschnitt;
- Fig. 6: die Anordnung nach Figur 4 in Draufsicht.
- Fig. 7: den Kolben einer alternativen Ausgestaltung der Erfindung im Querschnitt, mit im Bypasskanal angeordneten Bypassklappen.

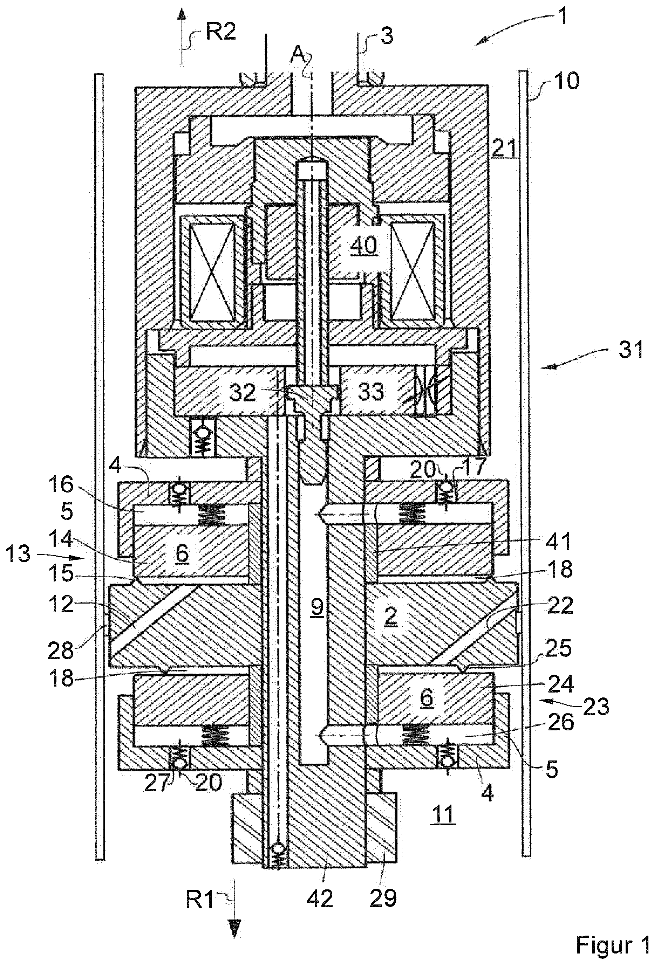

Figur 1 zeigt den Ausschnitt eines herkömmlichen Schwingungsdämpfers 1, wie er in der noch nicht veröffentlichten deutschen Patentanmeldung 10 2013 114 169.2 beschrieben ist.

Der Schwingungsdämpfer 1 umfasst ein Zylinderrohr 10, in dem ein Kolben 2 entlang einer Zylinderrohrachse A verschiebbar gehalten ist. Der Kolben 2 weist an seinem Außenumfang eine Ringdichtung 28 auf, so dass der Kolben 2 das Zylinderrohr 10 in einen ersten (kolbenstangenfernen) Arbeitsraum 11 und in einen zweiten (kolbenstangenseitigen) Arbeitsraum 21 abdichtend unterteilt. Der Kolben 2 ist an einem Befestigungszapfen 42 befestigt, der wiederum fest mit einer Kolbenstange 3 verbunden ist. Bei Betätigung der Kolbenstange 3 in einer ersten Betätigungsrichtung RI hin zum ersten Arbeitsraum 11 (auch "Druckrichtung " genannt) erhöht sich der Druck im ersten Arbeitsraum 11. Fluid, welches im ersten Arbeitsraum 11 vorhanden ist, strömt dann durch eine erste Fluiddurchführung 12 im Kolben 2 in den zweiten Arbeitsraum 21. Die Fluiddurchführung mündet kolbenstangenseitig in einen Vorhof 18, der durch den zugehörigen Ventilsitz 15 und die Ventilscheibe 16 von dem zweiten Arbeitsraum 21 getrennt ist. Bei der Förderung des Fluids durch die erste Fluiddurchführung 12 fließt das Fluid durch eine erste Ventilbaugruppe 13 mit einem Druckbegrenzungsventil 14. Das Druckbegrenzungsventil 6 kann z.B. aus einer oder mehreren flexiblen Ventilscheiben 14 gebildet sein. Bei Erreichen eines Mindestdrucks des Fluids in dem ersten Arbeitsraum 11 wird das erste Druckbegrenzungsventil 14, welches mit Vorspannung auf einem ersten Ventilsitz 15 aufsitzt, von dem ersten Ventilsitz 15 zumindest teilweise gelöst. So wird die Ventilscheibe 14 von der geschlossenen Stellung in die vom Ventilsitz abgehobene, geöffnete Stellung überführt. Eine hydraulische Verbindung wird so zwischen dem ersten Arbeitsraum 11 und dem zweiten Arbeitsraum 21 hergestellt. Dabei erzeugt das erste Druckbegrenzungsventil 14 im Zusammenspiel mit dem ersten Ventilsitz 15 die Dämpfkraft.

Das Druckbegrenzungsventil 14 wird durch einen in einer Vorsteuerkammer 16 herrschenden Druck (im Folgenden "Vorsteuerdruck") in Richtung des Ventilsitzes 15 beaufschlagt. Dieser Vorsteuerdruck in der ersten Vorsteuerkammer 16 kann während des Betriebs definiert eingestellt werden. Es ist ersichtlich, dass die Dämpfungskraft, die durch die erste Ventilbaugruppe 13 bereitgestellt wird, umso höher ist, je höher der Druck in der ersten Vorsteuerkammer 16 ist. Denn entsprechend höher muss im Vorhof 18 ein Druck aufgebaut werden, um das Druckbegrenzungsventil 14 vom Ventilsitz 15 zu lösen.

Der Schwingungsdämpfer 1 umfasst ferner eine zweite Ventilbaugruppe 23, die identisch ausgestaltet ist zur ersten Ventilbaugruppe 13. Die zweite Ventilbaugruppe ist dafür vorgesehen die Strömung des Fluids abzubremsen, wenn der Kolben 2 in einer zweiten Betätigungsrichtung R2 (auch"Zugrichtung" genannt) bewegt wird . In diesem Fall strömt das Fluid von dem zweiten Arbeitsraum 21 über eine zweite Fluiddurchführung 22 in den ersten (kolbenstangenfernen) Arbeitsraum 11. Eine zweite Vorsteuerkammer 26 wird gleichermaßen durch einen Boden 4, eine zylindrische Seitenwand 5 und eine zweite Ventilscheibe 24 eines zweiten Druckbegrenzungsventils 6 gebildet. Die zweite Ventilscheibe 24 und ein zweiter Ventilsitz 25 und die Anordnung des Vorhofes 18 sind identisch zur ersten Ventilbaugruppe 13 ausgebildet.

Die beiden Böden 4 weisen jeweils Fluiddurchführungen 17 bzw. 27 und Rückschlagventile 20 auf. Wird der Kolben 2 in Druckrichtung R1 bewegt, so strömt Dämpfungsfluid aus dem kolbenstangenfernen Arbeitsraum 11 durch die Fluiddurchführung 27 in die zweite Vorsteuerkammer 26. Wird der Kolben 2 in Zugrichtung R2 bewegt, so strömt Dämpfungsfluid aus dem kolbenstangenseitigen Arbeitsraum 21 durch die Fluiddurchführung 17 in die erste Vorsteuerkammer 16.

Die beiden Vorsteuerkammern 16, 26 sind miteinander hydraulisch über eine Verbindungsdurchführung 9 verbunden. Die Verbindungsdurchführung 9 umfasst eine axiale Bohrung in dem Befestigungszapfen 42 sowie zwei radiale Verbindungsbohrungen in dem Befestigungszapfen 42, welche die axiale Bohrung und die Vorsteuerkammern 16, 26 miteinander verbinden. Im Wesentlichen herrscht in beiden Vorsteuerkammern 16, 26 stets derselbe Druck. Wenn nun der Kolben 2 in der ersten Betätigungsrichtung R1 bewegt wird, so erhöht sich der Druck im ersten Arbeitsraum 11 und das Dämpfungsfluid strömt durch eine Fluiddurchführung 27 zwischen dem ersten Arbeitsraum 11 und der zweiten Vorsteuerkammer 26 aus dem ersten Arbeitsraum 11 in die zweite Vorsteuerkammer 26, wodurch der Vorsteuerdruck in der zweiten Vorsteuerkammer 26 erhöht wird. Durch die Verbindungsdurchführung 9 hindurch pflanzt sich der in der zweiten Vorsteuerkammer 26 aufgebaute Vorsteuerdruck auch in die erste Vorsteuerkammer 16 fort. Dadurch wird der Vorsteuerdruck in der ersten Vorsteuerkammer 16 erzeugt, mit dem das Dämpfungsverhalten der ersten Ventilbaugruppe 13 beeinflusst wird. Gleiches gilt für die Betätigung in der zweiten Betätigungsrichtung R2. In diesem Fall strömt das Fluid von dem zweiten Arbeitsraum 21 durch eine Fluiddurchführung 17 zwischen dem zweiten Arbeitsraum 21 und der ersten Vorsteuerkammer 16 in die erste Vorsteuerkammer 16. Der Vorsteuerdruck, der so in der ersten Vorsteuerkammer 16 erzeugt wird, pflanzt sich wiederum durch die Verbindungsdurchführung 9 in die zweite Vorsteuerkammer 26 fort. Damit das Fluid durch die Fluiddurchführungen 17, 27 nicht von der ersten Vorsteuerkammer 16 direkt in den zweiten Arbeitsraum 21 bzw. von der zweiten Vorsteuerkammer 26 in den ersten Arbeitsraum 11 strömen kann, sind in den Fluiddurchführungen 17, 27 jeweils Einwegeventile 20 angebracht, die z.B. als Rückschlagventile ausgebildet sind.

Der Vorsteuerdruck in den beiden Vorsteuerkammern 16 und 26 kann geregelt werden. Hierzu ist ein Vorsteuerventil 31 vorgesehen, welches einen Ventilkörper 32 aufweist. Der Ventilkörper ist beweglich entlang der Zylinderrohrachse A gehalten und kann auf einem feststehenden (bezogen auf den Befestigungszapfen) Ventilsitz 33 aufsitzen. Wenn der Ventilkörper 32 auf dem Ventilsitz 33 aufsitzt, ist ein Abfließen von Fluid durch das Vorsteuerventil 31 weitgehend verhindert. Während einer solchen Phase kann der Vorsteuerdruck aufgebaut oder gehalten werden. Ist der Ventilkörper 32 von dem Ventilsitz 33 gelöst, so kann durch das Vorsteuerventil 31 Fluid aus der Verbindungsdurchführung abfließen; in dieser Phase kann der Vorsteuerdruck verringert werden. Der Ventilkörper 32 wird dabei mittels eines magnetischen Aktuators 40 in die erste Betätigungsrichtung R1 beaufschlagt. In die zweite Betätigungsrichtung R2 wird der Ventilkörper 32 durch den Vorsteuerdruck beaufschlagt. Je nach den Kräfteverhältnissen, bedingt durch den magnetischen Aktuator 40 und den Vorsteuerdruck, ergibt sich dann die Stellung des Ventilkörpers 32 gegenüber dem Ventilsitz 33.

Üblicherweise werden die Ventilscheiben 16, 26 und/oder Ventilsitze 15, 25 mit Kerben oder Bohrungen versehen, so dass ein freier Durchflussquerschnitt entsteht, der nicht durch die Ventilscheibe 14 oder den Ventilsitz 15 verdeckt wird. Hierdurch wird definiert ein Bypassquerschnitt eingestellt, der zur Gestaltung der Dämpfungscharakteristik verwendet wird. Durch die vorgenannten Maßnahmen allerdings wird lediglich ein Bypassquerschnitt erreicht, der für beide Stufen, also die Druckstufe und die Zugstufe, gleichermaßen gilt. In manchen Anwendungen ist es allerdings erwünscht, Bypassquerschnitte in der Druckstufe unterschiedlich zur Zugstufe zu gestalten. Dies könnte zwar durch Einwegeventile innerhalb der Fluiddurchführung 12, 22 im Kolben 2 realisiert werden. Ist in der Fluiddurchführung allerdings ein solches Einwegeventil vorhanden, würde dies allerdings einen Rückstau in den vorgelagerten Vorhof 18 bewirken. Dieser Rückstau im Vorhof allerdings wirkt sich wiederum auf die Vorsteuerkammer 16, 26 aus und erhöht dort den Druck, obwohl dort gerade eine drucklose Phase vorherrscht. Dies führt zu einer Fehlfunktion bei der Regelung des Drucks in der Vorsteuerkammer, so dass diese Möglichkeit nicht realisiert wird.

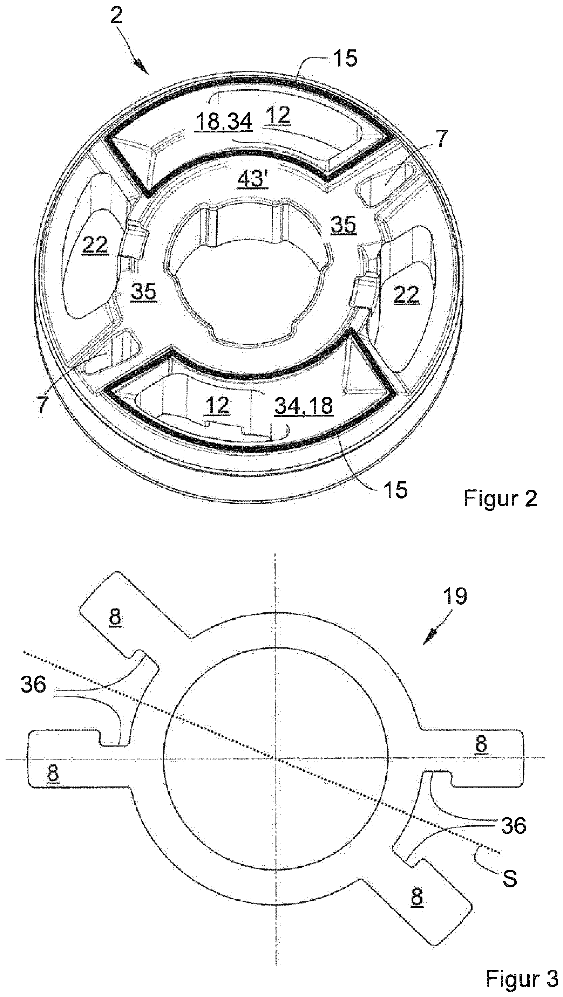

Der erfindungsgemäße Schwingungsdämpfer weist nun einen Kolben 2 auf, wie er anhand den Figuren 2 bis 6 beschrieben ist. In Figur 2 ist der Kolben 2 in Einzelheit zu erkennen. Zusätzlich zu den Fluiddurchführungen 12, 22 sind zwei weitere Durchbrüche zwischen den beiden Seiten des Kolbens 2 vorgesehen, die jeweils einen Bypasskanal 7 bilden.

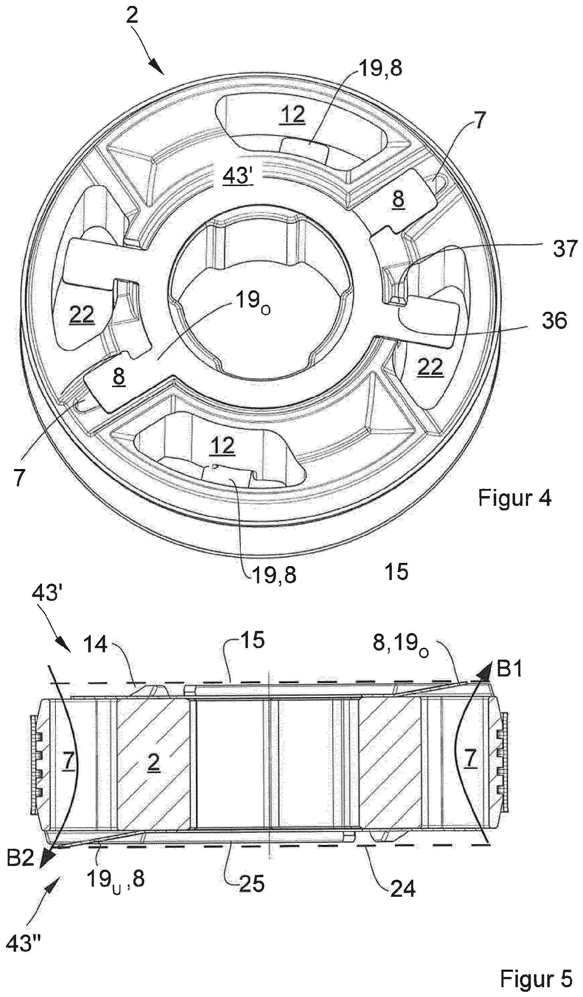

Zumindest teilweise abgedeckt wird ein solcher Bypasskanal 7 durch eine Rückschlagscheibe 19, die in Figur 3 in Einzelheit gezeigt ist. Die Rückschlagscheibe weist mehrere Bypassklappen 8 auf, die jeweils in genau eine Richtung wegklappbar sind, wenn sie auf einer entsprechenden Öffnung der Bypasskanäle 7 aufgelegt ist. Eine solche Rückschlagscheibe 190ist oben auf dem Kolben 2 aufgelegt; eine weitere Rückschlagscheibe 19u ist unten auf den Kolben 2 aufgelegt. Jeweils zwei Bypassklapppen 8 der jeweiligen Rückschlagscheibe 19 sind dabei in teilweiser Überdeckung mit den beiden Öffnungen des Bypasskanals 7, wie dies für die Oberseite in Figur 4 gezeigt ist und auch aus Figur 5 im Querschnitt für beide Seiten erkennbar ist. Wenn nun, wie in Figur 5 auf der rechten Seite zu erkennen, Fluid von unten nach oben durch die Bypasskanäle strömt (erste Durchflussrichtung B1), klappen die Bypassklappen 8 der oberen Rückschlagscheibe 190nach oben weg und reduzieren den Durchflussquerschnitt der Bypasskanäle in dieser Fließrichtung nicht. Wenn aber, wie in Figur 5 auf der linken Seite zu erkennen, Fluid von oben nach unten durch die Bypasskanäle 7 strömt (zweite Durchflussrichtung B2), versperren die Bypassklappen 8 der oberen Rückschlagscheibe 190 die Öffnung zumindest teilweise und reduzieren den Durchflussquerschnitt der Bypasskanäle in dieser Fließrichtung. Denn die Bypassklappen 8 können zwar vom Kolben weggeklappt werden, nicht aber in Richtung auf den Kolben 2 zu.

Entsprechend klappen die Bypassklappen 8 der unteren Rückschlagscheibe 19u nach unten weg und reduzieren den Durchflussquerschnitt der Bypasskanäle nicht, wenn Fluid in der zweiten Strömungsrichtung B2 strömt. Wenn aber Fluid durch die Bypasskanäle 7 in der ersten Durchflussrichtung B1 strömt, versperren die Bypassklappen 8 der unteren Rückschlagscheibe 19u die Öffnung zumindest teilweise und reduzieren den Durchflussquerschnitt der Bypasskanäle.

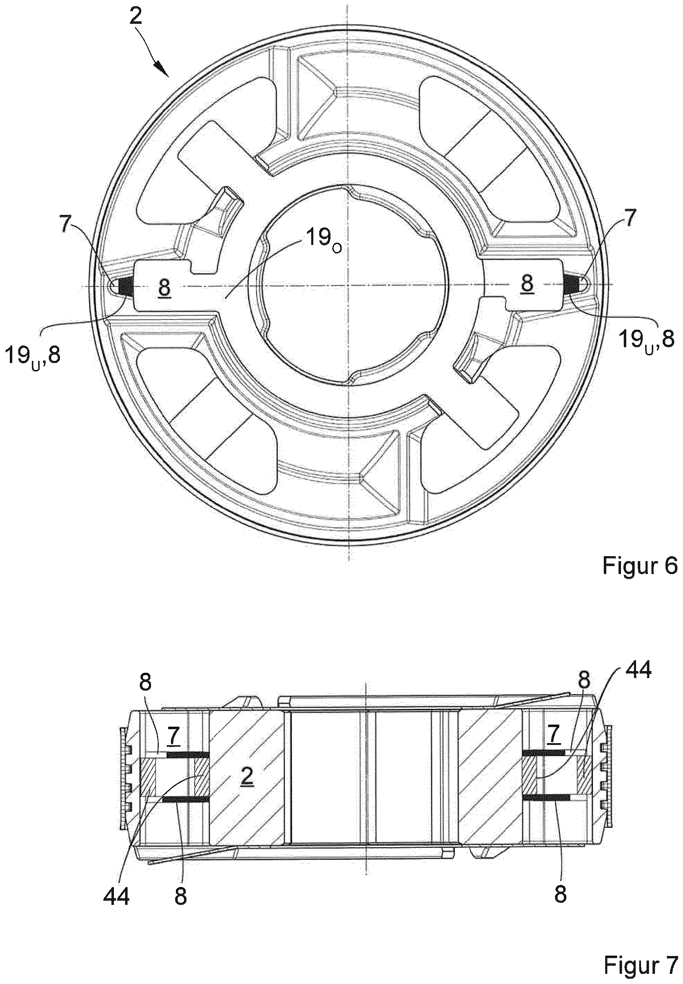

Durch die unterschiedlichen Ausgestaltungen der oberen und unteren Bypassklappen 8 lassen sich die Durchflussquerschnitte der Bypasskanäle für unterschiedliche Durchflussrichtungen getrennt voneinander einstellen. Figur 6 zeigt dazu den Kolben 2 von oben. Klar zu erkennen ist die obere Rückschlagscheibe 190; undeutlicher zu erkennen ist die untere Rückschlagscheibe 19u, da sie größtenteils von dem Kolben 2 und der obere Rückschlagscheibe 190verdeckt ist. Daher ist der erkennbare Teil der unteren Rückschlagscheibe 19u in dieser Figur schwarz hervorgehoben. Die Bypassklappen 8 der unteren Rückschlagscheibe 19u sind größer als die Bypassklappen 8 der oberen Rückschlagscheibe 190, wodurch sich der geringere Durchflussquerschnitt in der ersten Durchflussrichtung B1 (aus der Bildebene heraus) ergibt.

Damit sich der durch die Bypassklappe 8 gebildet Staudruck nicht in die Vorhöfe 18 fortpflanzt sind nun (wie in Figur 2 zu erkennen ist) auf den Seiten des Kolbens 2 zum einem erste Bereiche 34 ausgebildet sind, die von dem Ventilsitz 15 (hier stark umrandet dargestellt) umschlossen sind und zum anderen zweite, nämlich die übrigen Bereiche 35, die von den Ventilsitzen 15 nicht umschlossen sind. Diese vom Ventilsitz 15 umschlossenen ersten Bereiche 34 definieren die Lage der Vorhöfe 18 an den Seiten des Kolbens 2; in diese Vorhöfe 18 bzw. ersten Bereiche 34 münden stromabwärts die Fluiddurchführungen 12, 22. An den anderen, zweiten Bereichen 35 der Seite, die nicht von dem Ventilsitz 15 umschlossen sind, münden die Fluiddurchführungen 12, 22 eingangsseitig, also stromaufwärts. Ferner münden in die zweiten Bereiche 35 auch die Ein- und Ausgänge der Bypasskanäle 7. Insofern können die Eingänge des Bypasskanals 7 nun direkt mit in Bypassflussrichtung vorgelagerten Arbeitsräumen 11, 21 kommunizieren, ohne das der Vorhof 18 von dem Bypassvolumenstrom durchströmt wird.

In Figur 5 ist axiale Anordnung der Rückschlagscheiben 19 im Verhältnis zu den Ventilsitzen 15, 25 und den Ventilscheiben 14, 24 erkennbar. Die Positionen der Ventilscheiben 14, 24 sind durch die gestrichelten Linien angedeutet. Die Ventilscheiben 14, 24 liegen an dem erhabenen Bereich an, der durch die Ventilsitze 15, 25 ausgebildet ist. Die Ventilscheiben sind bezogen auf einen Kolbenmittelpunkt axial weiter außerhalb angeordnet als die jeweils auf derselben Seite des Kolbens 2 angeordnete Rückschlagscheibe 19.

In Figur 4 ist eine Oberseite des Kolbens 2 mit daran anliegender Rückschlagscheibe 19 gezeigt. Die Rückschlagscheibe 19 weist vier Bypassklappen 8 auf, obwohl der Kolben 2 nur zwei abzudeckende Bypasskanäle 7 aufweist. Zwei der Bypassklappen 8 überdecken jeweils einen Bypasskanal 7; zwei andere verdecken Bereiche von Ausgängen der Fluiddurchführungen 12, 22, was allerdings aufgrund des großen Querschnitts der Fluiddurchführungen 12, 22 ohne nennenswerten Einfluss bleibt, zumal diese beiden Bypassklappen 8 sich mit der Strömung hier in beiden Richtungen wegklappen lassen. Es ergibt sich eine rotationssymmetrische x-förmige Anordnung der Bypassklappen 8 bezogen auf eine gedachte Rotationssachse S (Figur 3). Diese Ausgestaltung ermöglicht es, dass die Rückschlagscheibe 19 stets korrekt montiert wird, unabhängig von der Ausrichtung der Rückschlagscheibe 19. Die Rückschlagscheibe 19 kann also auch umgekehrt auf den Kolben 2 angelegt werden. Entsprechend ist die Anordnung der Rückschlagscheibe auf der Unterseite des Kolbens 2.

Zudem weist die Rückschlagscheibe 19 im Bereich der Bypassklappen 8 definierte Anlageflächen 36 auf (Figur 3 und 4), die wiederum mit definierten Anlageflächen 37 am Kolben zusammenwirken (Figur 3), um die exakte Position und Ausrichtung relativ zum Kolben festzulegen. Da die definierten Anlageflächen 36 an allen vier Bypassklappen 8 vorgesehen sind, ist ein falsches Einsetzen der Rückschlagscheibe 19 nicht möglich. Die Anlageflächen 36 an der Rückschlagscheibe 19 wirken in Zusammenspiel mit den Anlageflächen 37 am Kolben als Anschlag für eine korrekte Positionierung in radialer Richtung und in Umfangsrichtung.

Figur 7 zeigt eine alternative Ausgestaltung der vorliegenden Erfindung. Abweichend zur oben beschriebenen Ausgestaltung verdecken die Bypassklappen 8 dort nicht einen Eingang des Bypasskanals 7; vielmehr sind die Bypassklappen 8 innen im Bypasskanal 7 angeordnet. Die Bypassklappen 8 liegen im Bypasskanal 8 auf einem Anlagevorsprung 44 auf, der ein Wegklappen der Bypassklappen 8 lediglich in einer Richtung (nämlich vom Anlagevorsprung 44 weg) erlaubt, in die andere Richtung (nämlich zum Anlagevorsprung 44 hin) aber verhindert. Durch geeignete nicht gezeigte Vorspannmittel können die Bypassklappen 8 in dem Bypasskanal 7 fixiert werden.

### Bezuqszeichenliste

- 1: Schwingungsdämpfer
- 2: Kolben
- 3: Kolbenstange
- 4: Boden
- 5: zylindrische Seitenwand
- 6: formstabiler bewegbarer Deckel
- 7: Bypasskanal
- 8: Bypassklappe
- 9: Verbindungsdurchführung zwischen den beiden Vorsteuerkammern
- 10: Zylinderrohr
- 11: erster Arbeitsraum
- 12: erste Fluiddurchführung
- 13: erste Ventilbaugruppe
- 14: erste Ventilscheibe
- 15: erster Ventilsitz
- 16: erste Vorsteuerkammer
- 17: Verbindungsdurchführung zwischen zweitem Arbeitsraum 21 und erster Vorsteuerkammer 16
- 18: Vorhof
- 19: Rückschlagscheibe
- 20: Einwegeventil
- 21: zweiter Arbeitsraum
- 22: zweite Fluiddurchführung
- 23: zweite Ventilbaugruppe
- 24: zweite Ventilscheibe
- 25: zweiter Ventilsitz
- 26: zweite Vorsteuerkammer
- 27: Fluiddurchführung zwischen erstem Arbeitsraum 11 und zweiter Vorsteuerkammer 26
- 28: Ringdichtung
- 31: Vorsteuerventil
- 32: Ventilkörper
- 33: Ventilsitz
- 34: von Ventilsitz umschlossener erster Seitenbereich
- 35: von Ventilsitz nicht umschlossener zweiter Seitenbereich
- 36: Anlagefläche an Bypassklappe
- 37: Anlagefläche an Kolben
- 40: magnetischer Aktuator
- 42: Befestigungszapfen
- 43': kolbenstangenseitige Seite des Kolbens
- 43": kolbenstangenferne Seite des Kolbens
- 44: im Bypasskanal angeordnete Anlagevorsprünge

- A: Zylinderrohrachse
- R: Betätigungsrichtung
- B: Durchflussrichtung durch Bypasskanal
- S: Rotationsachse

## Patentansprüche

1. Regelbarer Schwingungsdämpfer (1), insbesondere für ein Fahrzeugfahrwerk, umfassend ein Zylinderrohr (10), das ein darin abgedichtet aufgenommenes Hydraulikfluid aufweist, einen Kolben (2), der innerhalb des Zylinderrohres (10) entlang einer Zylinderrohrachse (A) axial bewegbar ist und der das Zylinderrohr (10) in zwei Arbeitsräume (11, 21) unterteilt, eine Kolbenstange (3), die parallel zur Zylinderrohrachse (A) ausgerichtet und mit dem Kolben (2) verbunden ist, wobei der Kolben (2) zumindest zwei Fluiddurchführungen (12, 22) aufweist, durch die der eine Arbeitsraum (11, 21) mit dem anderen Arbeitsraum (21, 11) verbunden ist, wobei eine erste Ventilbaugruppe (13) zur Dämpfung der Kolbenbewegung in einer ersten Betätigungsrichtung (R1) an einer ersten Fluiddurchführung (12) angeordnet ist und wobei eine zweite Ventilbaugruppe (23) zur Dämpfung der Kolbenbewegung in einer zweiten Betätigungsrichtung (R2) an einer zweiten Fluiddurchführung (22) angeordnet ist, wobei jede Ventilbaugruppe (13, 23) zumindest eine Ventilscheibe (14, 24) aufweist, die in einer geschlossenen Ventilstellung auf einem Ventilsitz (15, 25) aufsitzt und so die zugehörige Fluiddurchführung (12, 22) zumindest teilweise abdeckt, und die in einer geöffneten Ventilstellung zumindest teilweise von dem Ventilsitz (15, 25) beabstandet ist,
wobei der Ventilsitz (15, 25), die zugehörige Ventilscheibe und der Kolben (2) jeweils einen Vorhof (18) abgrenzen, in den die jeweilige Fluiddurchführung (12, 22) ausgangsseitig mündet, und im Kolben (2) zusätzlich zu den Fluiddurchführungen (12, 22) ein Bypasskanal (7) mit unterschiedlich großen Durchflussquerschnitten für beide Durchflussrichtungen (B1, B2) vorgesehen ist oder mehrere Bypasskanäle (7) vorgesehen sind, deren Durchflussquerschnitte in Summe für beide Durchflussrichtungen (B1 , B2) unterschiedlich groß sind, wobei anhand des einen Bypasskanals (7) eine Fluidverbindung oder anhand der mehreren Bypasskanäle (7) mehrere Fluidverbindungen zwischen den beiden Arbeitsräumen (11, 21) unter Umgehung der Vorhöfe (18) gebildet ist bzw. sind,
wobei Öffnungen des Bypasskanals (7) bzw. der Bypasskanäle (7) durch eine Rückschlagscheibe (19), die separat zu den Ventilscheiben (14, 24) ausgebildet ist, zumindest teilweise bedeckt sind,
wobei eine Rückschlagscheibe (19) zur Begrenzung des Durchflussquerschnitts koaxial und axial versetzt zu einer Ventilscheibe (14) angeordnet ist, wobei die Rückschlagscheibe (19) und die Ventilscheibe (14) an derselben Seite (43', 43") des Kolbens (2) angeordnet sind, **dadurch gekennzeichnet, dass** die Rückschlagscheibe zur Reduktion des Bypassquerschnitts den Eingang des Bypasskanals nicht vollständig abdeckt, wobei der Durchflussquerschnitt (7) zumindest in einer Durchflussrichtung (B1, B2) durch eine Rückschlagscheibe (19) verringert wird, wobei die Rückschlagscheibe (19) mindestens eine, vorzugsweise mehrere radial, vorstehende Bypassklappen (8) aufweist,
wobei die für beide Durchflussrichtungen (B1, B2) unterschiedlich große Durchflussquerschnitte dadurch realisiert sind, dass eine Öffnung des Bypasskanals (7) bzw. Öffnungen der Bypasskanäle (7) an den beiden Seiten (43', 43") des Kolbens (2) in unterschiedlichem Maße durch entsprechende Rückschlagscheiben (19) bedeckt sind.

2. Regelbarer Schwingungsdämpfer (1) nach dem vorherigen Anspruch, **dadurch gekennzeichnet, dass** an einer kolbenstangenseitigen und/oder einer kolbenstangenfernen Seite (43', 43") des Kolbens (2) eine Öffnung der ersten oder zweiten Fluiddurchführung (12, 22) vorgesehen ist, die durch einen der Ventilsitze (15, 25) umschlossen ist, und dass an dieser Seite (43', 43") des Kolbens (2) eine Eingangsöffnung des Bypasskanals (7) vorgesehen ist, die nicht von dem Ventilsitz (15, 25) umschlossen ist.

3. Regelbarer Schwingungsdämpfer (1) nach einem der vorherigen Ansprüche, **dadurch gekennzeichnet, dass** auf einer Seite (43', 43") des Kolbens in Umfangsrichtung verteilt mehrere Umfangsbereiche gebildet sind, von denen zumindest ein erster Bereich (34) von einem Ventilsitz (15) umschlossen ist und zumindest ein zweiter Bereich (35) von dem Ventilsitz (15) nicht umschlossen ist, wobei die Öffnungen der Bypasskanäle (7) in den zweiten Bereichen (35) angeordnet sind.

4. Regelbarer Schwingungsdämpfer (1) nach dem vorherigen Anspruch, **dadurch gekennzeichnet, dass** die Rückschlagscheibe (19) derart ausgestaltet ist, dass die Rückschlagscheibe (19) wahlweise mit beiden Seiten derart auf dem Kolben (2) montiert werden kann, dass die eine Bypassklappe (8) bzw. die mehreren Bypassklappen (8) den Durchflussquerschnitt des Bypasskanals (7) bzw. die Durchflussquerschnitte der Bypasskanäle (7) verringern.

5. Regelbarer Schwingungsdämpfer (1) nach einem der vorherigen Ansprüche, **dadurch gekennzeichnet, dass** an den Bypassklappen (8) Anlageflächen (36) zur korrekten Ausrichtung der Rückschlagscheibe (19) gegenüber einem Positionierelement (37) des Kolbens (2) ausgebildet sind.

6. Regelbarer Schwingungsdämpfer (1) nach einem der vorherigen Ansprüche, **dadurch gekennzeichnet, dass** jede Ventilbaugruppe (13, 23) eine Vorsteuerkammer (16, 26) umfasst, wobei durch Druckbeaufschlagung der Vorsteuerkammer (16, 26) die Ventilscheibe (14, 24) in die geschlossene Ventilstellung vorspannbar ist, wobei der Druck in den jeweiligen Vorsteuerkammern (16, 26) durch zumindest ein Vorsteuerventil (31) einstellbar ist.

## Claims

1. Regulable vibration damper (1), in particular for a vehicle chassis, comprising a cylinder barrel (10) which has a hydraulic fluid received therein in a sealed-off manner, comprising a piston (2) which is axially movable within the cylinder barrel (10) along a cylinder-barrel axis (A) and which subdivides the cylinder barrel (10) into two working chambers (11, 21), comprising a piston rod (3) which is oriented parallel to the cylinder-barrel axis (A) and which is connected to the piston (2), wherein the piston (2) has at least two fluid leadthroughs (12, 22) by way of which one working chamber (11, 21) is connected to the other working chamber (21, 11), wherein a first valve assembly (13) for damping the piston movement in a first actuation direction (R1) is arranged at a first fluid leadthrough (12), and wherein a second valve assembly (23) for damping the piston movement in a second actuation direction (R2) is arranged at a second fluid leadthrough (22), wherein each valve assembly (13, 23) has at least one valve disc (14, 24) which, in a closed valve position, is seated on a valve seat (15, 25) and thus at least partially covers the associated fluid leadthrough (12, 22) and which, in an open valve position, is at least partially spaced apart from the valve seat (15, 25),
wherein the valve seat (15, 25), the associated valve disc and the piston (2) in each case delimit a vestibule (18) into which the respective fluid leadthrough (12, 22) opens at an outlet side, and, in the piston (2), in addition to the fluid leadthroughs (12, 22), there is provided a bypass duct (7) with throughflow cross sections of different size for the two throughflow directions (B1, B2), or there are provided multiple bypass ducts (7) whose throughflow cross sections are, in sum total, of different size for the two throughflow directions (B1, B2), wherein, by means of the single bypass duct (7), a fluidic connection, or by means of the multiple bypass ducts (7), multiple fluidic connections, is or are formed between the two working chambers (11, 21), bypassing the vestibules (18),
wherein openings of the bypass duct (7) or of the bypass ducts (7) are at least partially covered by a non-return disc (19) which is formed separately from the valve discs (14, 24),
wherein a non-return disc (19) for limiting the throughflow cross section is arranged coaxially and axially offset with respect to a valve disc (14), wherein the non-return disc (19) and the valve disc (14) are arranged at the same side (43', 43'') of the piston (2), **characterized in that** the non-return disc, for reducing the bypass cross section, does not completely cover the inlet of the bypass duct, wherein the throughflow cross section (7) is reduced, at least in one throughflow direction (B1, B2), by a non-return disc (19), wherein the non-return disc (19) has at least one, preferably multiple radially, projecting bypass flaps (8),
wherein the throughflow cross sections of different size for the two throughflow directions (B1, B2) are realized in that an opening of the bypass duct (7) or openings of the bypass ducts (7) at the two sides (43', 43'') of the piston (2) are covered to different extents by corresponding non-return discs (19).

2. Regulable vibration damper (1) according to the preceding claim, **characterized in that**, at a piston-rod-facing and/or a piston-rod-averted side (43', 43'') of the piston (2), there is provided an opening of the first or second fluid leadthrough (12, 22), which opening is surrounded by one of the valve seats (15, 25), and **in that**, at said side (43', 43'') of the piston (2), there is provided an inlet opening of the bypass duct (7), which inlet opening is not surrounded by the valve seat (15, 25).

3. Regulable vibration damper (1) according to either of the preceding claims, **characterized in that**, on one side (43', 43'') of the piston, multiple circumferential regions are formed in a manner distributed in a circumferential direction, of which circumferential regions at least one first region (34) is surrounded by a valve seat (15) and at least one second region (35) is not surrounded by the valve seat (15), wherein the openings of the bypass ducts (7) are arranged in the second regions (35).

4. Regulable vibration damper (1) according to the preceding claim, **characterized in that** the non-return disc (19) is designed in such a way that the non-return disc (19) can be mounted selectively by way of both sides on the piston (2) in such a way that the single bypass flap (8) or the multiple bypass flaps (8) reduce the throughflow cross section of the bypass duct (7) or the throughflow cross sections of the bypass ducts (7).

5. Regulable vibration damper (1) according to one of the preceding claims, **characterized in that**, on the bypass flaps (8), there are formed abutment surfaces (36) for correct orientation of the non-return disc (19) with respect to a positioning element (37) of the piston (2).

6. Regulable vibration damper (1) according to one of the preceding claims, **characterized in that** each valve assembly (13, 23) comprises a pilot-control chamber (16, 26), wherein the valve disc (14, 24) is able to be preloaded into the closed valve position by pressurization of the pilot-control chamber (16, 26), wherein the pressure in the respective pilot-control chambers (16, 26) is able to be set by way of at least one pilot-control valve (31).

## Revendications

1. Amortisseur de vibrations régulable (1), en particulier pour un châssis de véhicule, comprenant un cylindre (10) dans lequel est reçu un fluide hydraulique de manière étanche, comprenant un piston (2) qui est axialement mobile dans le cylindre (10) le long d'un axe cylindre-tube (A) et qui subdivise le cylindre (10) en deux chambres de travail (11, 21), comprenant une tige de piston (3) orientée parallèlement à l'axe du cylindre (A) et reliée au piston (2), dans lequel le piston (2) possède au moins deux passages de fluide (12, 22) par lesquels une chambre de travail (11, 21) est reliée à l'autre chambre de travail (21, 21), dans lequel un premier ensemble de soupapes (12, 22) est relié à l'autre chambre de travail (21, 21), 11), dans lequel un premier ensemble de soupape (13) pour amortir le mouvement du piston dans une première direction d'actionnement (R1) est disposé sur une première traversée de fluide (12), et dans lequel un deuxième ensemble de soupape (23) pour amortir le mouvement du piston dans une deuxième direction d'actionnement (R2) est disposé sur une deuxième traversée de fluide (22), dans lequel chaque ensemble de soupape (13, 23) comporte au moins un disque de soupape (14, 24) qui, dans une position de soupape fermée, est assis sur un siège de soupape (15, 25) et couvre donc au moins partiellement le passage de fluide associé (12, 22) et qui, dans une position de soupape ouverte, est au moins partiellement écarté du siège de soupape (15, 25),
dans lequel le siège de soupape (15, 25), le disque de soupape associé et le piston (2) délimitent chacun un vestibule (18) dans lequel le passage de fluide respectif (12, 22) s'ouvre du côté de la sortie, et dans le piston (2), en plus des passages de fluide (12, 22), il y a un conduit de dérivation (7) avec des sections de passage de taille différente pour les deux directions de passage (B1, B2), ou plusieurs conduits de dérivation (7) dont les sections de passage sont, au total, de dimensions différentes pour les deux directions de passage (B1, B2), dans lesquels, au moyen du conduit de dérivation unique (7), une connexion fluidique, ou au moyen des conduits de dérivation multiples (7), plusieurs connexions fluidiques, sont formées entre les deux chambres de travail (11, 21), en contournant les vestibules (18), dans lequel les ouvertures du conduit de dérivation (7) ou des conduits de dérivation (7) sont au moins partiellement couvertes par un disque de non-retour (19) formé séparément des disques de soupape (14, 24),
dans lequel un disque de non-retour (19) destiné à limiter la section de passage est disposé de manière coaxiale et décalée axialement par rapport à un disque de soupape (14), dans lequel le disque de non-retour (19) et le disque de soupape (14) sont disposés du même côté (43', 43'') du piston (2),
**caractérisé en ce que** le disque de non-retour, pour réduire la section de contournement, ne couvre pas complètement l'entrée du conduit de contournement, dans lequel la section de passage (7) est réduite, au moins dans une direction de passage (B1, B2), par un disque de non-retour (19), dans lequel le disque de non-retour (19) a au moins un, de préférence plusieurs, volets de contournement (8) en saillie radiale,
dans lequel les sections de passage de taille différente pour les deux directions de passage (B1, B2) sont réalisées **en ce qu'**une ouverture du conduit de dérivation (7) ou des ouvertures des conduits de dérivation (7) sur les deux côtés (43', **43'')** du piston (2) sont couvertes à des degrés différents par des disques de non-retour correspondants (19).

2. Amortisseur de vibrations régulable (1) selon la revendication précédente, **caractérisé en ce que**, sur un côté (43', **43'')** du piston (2) faisant face à la tige du piston et/ou sur un côté opposé à la tige du piston (43', **43'')** de , il y a une ouverture de la première ou de la deuxième traversée de fluide (12, 22), laquelle ouverture est entourée par l'un des sièges de soupape (15, 25), et **en ce que**, sur ledit côté (43', 43'') du piston (2), il y a une ouverture d'entrée du conduit de dérivation (7), laquelle ouverture d'entrée n'est pas entourée par le siège de soupape (15, 25).

3. Amortisseur de vibrations régulable (1) selon l'une ou l'autre des revendications précédentes, **caractérisé en ce que**, sur un côté (43', 43'') du piston, plusieurs régions circonférentielles sont formées d'une manière répartie dans une direction circonférentielle, dont au moins une première région (34) est entourée par un siège de soupape (15) et au moins une deuxième région (35) n'est pas entourée par le siège de soupape (15), dans laquelle les ouvertures des conduits de dérivation (7) sont disposées dans les deuxièmes régions (35).

4. Amortisseur de vibrations régulable (1) selon la revendication précédente, **caractérisé en ce que** le disque de non-retour (19) est conçu de telle sorte que le disque de non-retour (19) peut être monté sélectivement des deux côtés sur le piston (2) de telle sorte que le volet de dérivation unique (8) ou les volets de dérivation multiples (8) réduisent la section de passage du conduit de dérivation (7) ou les sections de passage des conduits de dérivation (7).

5. Amortisseur de vibrations régulable (1) selon l'une des revendications précédentes, **caractérisé en ce que**, sur les clapets de dérivation (8), sont formées des surfaces de butée (36) pour l'orientation correcte du disque de non-retour (19) par rapport à un élément de positionnement (37) du piston (2).

6. Amortisseur de vibrations régulable (1) selon l'une des revendications précédentes, **caractérisé en ce que** chaque ensemble de soupape (13, 23) comprend une chambre de commande pilote (16, 26), dans laquelle le disque de soupape (14, 24) peut être préchargé dans la position de soupape fermée par pressurisation de la chambre de commande pilote (16, 26), dans laquelle la pression dans les chambres de commande pilote respectives (16, 26) peut être réglée au moyen d'au moins une soupape de commande pilote (31).
